(19) Europäisches Patentamt
European Patent Office
Office européen des brevets

(11) EP 2 289 989 A1

(12) EUROPEAN PATENT APPLICATION
published in accordance with Art. 153(4) EPC

(43) Date of publication:
02.03.2011 Bulletin 2011/09

(51) Int Cl.:
$C08K\ 9/02$ (2006.01)    $C08J\ 3/00$ (2006.01)
$C08L\ 101/00$ (2006.01)

(21) Application number: 09709933.7

(22) Date of filing: 16.02.2009

(86) International application number:
PCT/JP2009/052573

(87) International publication number:
WO 2009/102065 (20.08.2009 Gazette 2009/34)

(84) Designated Contracting States:
AT BE BG CH CY CZ DE DK EE ES FI FR GB GR
HR HU IE IS IT LI LT LU LV MC MK MT NL NO PL
PT RO SE SI SK TR
Designated Extension States:
AL BA RS

(30) Priority: 14.02.2008  JP 2008033730

(71) Applicant: BLH Ecology Concepts, L.L.C.
Granbury, TX 76048 (US)

(72) Inventors:
• OTAKE, Katsuto
  Tsukubamirai-shi
  Ibaraki 300-2358 (JP)

• TAKEBAYASHI, Hitoshi
  Tsukuba-shi
  Ibaraki 305-0053 (JP)
• YOKOSUKA, Masahiko
  Mito city,
  Ibaraki prefecture (JP)

(74) Representative: HOFFMANN EITLE
Patent- und Rechtsanwälte
Arabellastraße 4
81925 München (DE)

(54) **ADDITIVE, METHOD FOR PRODUCTION OF THE SAME, AND COMPOSITION CONTAINING THE SAME**

(57) The present invention provides an additive which is produced by treating a raw material for the additive with carbon dioxide under pressure and subsequently reducing the pressure, wherein the raw material comprises one or more components. Preferably, the raw material for the additive is selected from the following items (A) to (C): (A) a granule or powder comprising one or more components; (B) a material which comprises a granule or powder comprising one or more components and an emulsion, microemulsion or non-compatible liquid mixture adhered on the surface of the granule or powder, wherein the emulsion, microemulsion or non-compatible liquid mixture comprises a component that serves as a continuous phase and a component that serves as a dispersion phase and is dispersed in the component that serves as a continuous phase; and (C) a liquid comprising a single component, a homogeneous mixed liquid comprising two or more components, an inhomogeneous mixed liquid comprising two or more components, or a mixture of a liquid and a solid material.

Fig. 1

EP 2 289 989 A1

**Description**

Technical Field

The present invention is related to an additive, a method for the production of same, and a composition containing same.

Background Art

When producing a molded component with resin, one generally performs a reformulation by mixing or compounding raw materials suited to the purpose and adding an additive such as a flame retardant, plasticizer, antioxidant, and antistatic agent. For example, when adding an additive to perform the resin molding process, one goes through the processes of (1) heating the material to an easily flowing state and adding various additives and other polymers to make it uniform; (2) pouring it into a form and molding it into the prescribed shape; and (3) cooling it or performing a curing reaction so that its shape does not change.

A method has been disclosed in which carbon dioxide is added to an alloy resin wherein crystalline resin and non-crystalline resin, for example, are combined together for the purpose of enhancing strength, etc., which is then plasticized and formed at a temperature lower than the melting point of the crystalline resin monomer (see Japanese Patent Gazette No. 2003-211483). As a method for mixing additives as uniformly as possibly in resin and forming them, a method has also been disclosed wherein, for example, after performing the preliminary process of preheating a thermoplastic resin and additive and mixing them together, the mixture that has undergone preprocessing is kept at the room temperature following the completion of preprocessing and is thermal kneaded (see WIPO Publication No. WO2004/033530) Moreover, a method has been disclosed (see Japanese Patent Gazette No. H1 1-255925) as a technique for the reformulation of a polymer base material to inhibit the elution of additives in medical devices such as catheters and contact lenses, wherein a polymer base material, an additive that does not dissolve in this polymer base material, and a polymer swelling aid that is soluble in a supercritical fluid such as carbon dioxide and capable of impregnating the polymer base material are placed in a pressure vessel, after which a supercritical fluid is placed inside the pressure vessel, causing the additive and polymer swelling aid to impregnate the polymer base material.

Disclosure of the Invention

Problems to be Resolved by the Invention

An object of the present invention is to provide an additive, a method for production of same, and a composition containing same that is capable of effectively reformulating a composition when the composition is obtained by adding an additive to a base material.

Means of Solving the Problems

To achieve the above-described object, the following additive(s), method for the production of same, and composition containing same are provided in the present invention.

< 1 > An additive wherein a raw material comprising one or a plurality of components consisting of additive(s) is obtained by pressure treatment in carbon dioxide and then decreasing pressure.
< 2 > The additive as defined in < 1 >, wherein the aforementioned raw material is a granule or powder comprising one or a plurality of components.
< 3 > The additive as defined in < 1 >, wherein the aforementioned raw material is one in which an emulsion, microemulsion, or non-compatible mixed liquid, for which a component comprising a dispersion phase has been dispersed into a component comprising a continuous phase, is adhered to the surface of a granule or powder comprising one or a plurality of components.
< 4 > The additive as defined in < 1 >, wherein the aforementioned raw material is a liquid comprising one component, a homogenous mixed liquid comprising a plurality of components, an inhomogeneous mixed liquid comprising a plurality of components, or a mixture of liquid and solid.
< 5 > The additive as defined in < 4 >, wherein the aforementioned raw material is the aforementioned inhomogeneous mixed liquid and is an emulsion, microemulsion, or non-compatible mixed liquid in which a component comprising a dispersion phase has been dispersed into a component comprising a continuous phase.
< 6 > The additive as defined in < 5 >, wherein the inhomogeneous mixed liquid comprising the aforementioned raw material also contains a surfactant or viscosity modifier.

< 7 > The additive as defined in < 4 >, wherein the aforementioned raw material is a mixture of solid with the aforementioned liquid and also contains a surfactant or dispersion stabilizer.

< 8 > A composition containing the additives as defined in < 1 > through < 7 >.

< 9 > A method for the production of an additive wherein is included a process for pressure treating with carbon dioxide a raw material comprising one or a plurality of components comprising the additive, and a process of reducing pressure after pressure treatment with the aforementioned carbon dioxide.

Effect of the Invention

With the present invention, an additive, a method for production of same, and a composition containing same is provided that are capable of effectively reformulating a composition when the composition is obtained by adding an additive to a base material.

Brief Description of the Drawings

[Fig. 1] A schematic view showing the configuration of the apparatus used in the carbon dioxide pressure treatment of the additive in the working example.

[Fig. 2] A schematic view showing the production process for the molding in the working g example.

[Fig. 3] A schematic view showing a method for measuring the light transmittance of the molding.

[Fig. 4] A graph showing light transmittance and crystallinity in moldings A through E.

[Fig. 5] A graph showing the crystallinity measured for moldings in which an additive was added that was $CO_2$ pressure treated with varying temperatures

[Fig. 6] A graph showing the measured crystal size for moldings to which an additive was added that was $CO_2$ pressure treated with varying temperatures.

[Fig. 7] A graph showing the measured light transmittance for moldings to which an additive was added that was $CO_2$ pressure treated with varying temperatures.

[Fig. 8] A diagram showing a method that measures the contact angle of a drop of additive that was placed onto a Teflon® sheet.

[Fig. 9] A graph showing the contact angle and viscosity of the additive that was $CO_2$ pressure treated with varying temperatures.

[Fig. 10] A diagram modeling the dispersed state of the additive added to the base material. (A) Untreated additive added (B) $CO_2$ pressure treated additive added

Best Mode for Carrying Out the Invention

We will explain the present invention in detail below with reference to the attached drawings. The inventors discovered that, after pressure treating a raw material comprising an additive with carbon dioxide, the physical properties of the additive such as the wettability and viscosity could be significantly modified by decreasing the pressure. Moreover, they discovered that it was possible to effectively reformulate a composition in terms of light transmittance, crystallinity, and strength by adding the additive obtained through this kind of carbon dioxide pressure treatment to the base material to produce a composition.

< Additives >

Additives that are subject to the present invention, when producing the intended composition, are not specifically limited to being those added to improve (reformulate) the properties of the base material comprising the principal component therein or to impart another function to the base material, and may be either solid or liquid. For example, when producing a resin composition with a polymer as the base material, additives include a filler, foaming agent, lubricant, crystallization accelerant, antioxidant, heat resistance improver, thermal stabilizer, degradation preventor, flame retardant, antistatic agent, anti-UV agent, brightening agent, delustering agent, plasticizer, lubricant, mold release agent, crystallization accelerant, blocking agent, or colorant (dye, pigment). The invention is applicable to these or other additives.

The raw material for an additive of the present invention may consist of one component or may consist of a plurality of components and may be either solid or liquid.

The raw material for an additive, preferably, will include: (A) a granule or powder consisting of one or a plurality of components; (B) a material consisting of one or a plurality of components and an emulsion, microemulsion, or non-compatible mixed liquid that is adhered onto the surface of the granule or powder, wherein the emulsion, microemulsion, or non-compatible mixed liquid comprises a component that serves as a continuous phase and a component that serves as a dispersion phase and is dispersed in the component that serves as a continuous phase; and (C) a liquid comprising one component, a homogeneous mixed liquid comprising a plurality of components, an inhomogeneous mixed liquid comprising a plurality of components, or a mixture of a liquid and a solid material.

For example, a raw material comprising an inhomogeneous mixed liquid includes an emulsion, microemulsion, or non-compatible mixed liquid wherein a component comprising a dispersion phase is dispersed into a component comprising a continuous phase. The emulsion may be either an oil-in-water (O/W type) emulsion, wherein oil is dispersed in water, or a water-in-oil (W/O type) emulsion, wherein water is dispersed in oil. It may also be one in which oil is dispersed in a liquid with hydrous properties such as glycerin or a non-compatible mixed liquid that is segregated into two or more layers.

In addition, in a dispersion medium such as water it may be one in which a liposome that embeds physical properties suited to the purpose has been dispersed.

An inhomogeneous mixed liquid may additionally contain a surfactant or viscosity modifier for the purpose of achieving an improvement in dispersiveness, a reduction of surface tension, or a reduction of viscosity.

The types of surfactant are not specifically limited, and it is possible to use a nonionic, anionic, cationic, or amphoteric surfactant.

Anionic surfactants, for example, include a fatty acid system (anionic) such as a sodium fatty acid, potassium fatty acid, alpha-sulfo fatty acid ester; a linear alkyl benzene system such as sodium linear alkyl benzene sulfonic acid; a higher alcohol system such as a sodium alkylsulfate ester or sodium alkyl ether sulfate ester; an alpha olefin system such as sodium alpha olefin sulfonate; and a normal paraffin system such as sodium alkyl sulfonate.

Cationic surfactants, for example, include a quaternary ammonium salt system such as alkyl trimethyl ammonium salt or dialkyl dimethyl ammonium salt.

In addition, an amphoteric surfactant includes an amino acid system such as sodium alkylamino fatty acid; a betaine system such alkyl betaine; or an amine oxide system such as alkylamine oxide.

Nonionic surfactants include an ester type such as a sucrose fatty acid ester, sorbitan fatty acid ester, or polyoxyethylene sorbitan fatty acid ester; an ether type such as a polyoxyethylene alkyl ether, polyoxyethylene decyl ether, dodecyl ether, or polyoxyethylene alkylphenyl ether; an ester-ether type; and other nonionic surfactants such as a fatty acid alkanolamide.

It is possible to use the above surfactants by mixing a single type by itself or two or more types.

The types of viscosity modifier are not specifically limited, and any viscosity modifier can be used.

Viscosity modifiers include, for example, a polyacrylic acid amide, polyacrylic acid, polyacrylate, polyacrylic acid copolymer, polyacrylate copolymer, polymethacrylic acid, polymethacrylate, polymethacrylic acid copolymer, polymethacrylate copolymer, polyacrylamide, polymethacrylamide, liquid paraffin, sodium polyacrylic acid, polysaccharide thickener, glycerin, sugar phosphate ester or a salt thereof, pectin, cellulose, and chitosan, and it is possible to use these one type by itself or by mixing two or more together.

In addition, when it is a mixture of a liquid and a solid such as a suspension, for example, the raw material may additionally contain a surfactant or a dispersion stabilizer for the purpose of achieving improvement in the dispersiveness of solid components (the dispersed material) against liquid components (the dispersion medium).

The types of surfactant are not specifically limited, and a nonionic, anionic, cationic, or ampholytic surfactant can be used. It is possible, for example, to use previously listed surfactants that can be contained the above-mentioned inhomogeneous mixed liquids. The types of dispersion stabilizer are not specifically limited, and it is possible to use any dispersion stabilizer. Included, for example, are various types of the above-described surfactant and various types of viscosity modifier, and solid microparticles such as fine silica particles.

< Pressure Treatment with Carbon Dioxide >

In the present invention, we reduce the pressure after pressure treating the raw material of additives like the above with carbon dioxide. By so doing, we are able to obtain an additive whose dispersiveness is superior to that of the base material.

For the carbon dioxide used in pressure treatment, it is possible to make best use of carbon dioxide in a supercritical state or under temperature or pressure conditions above the critical point. Here, carbon dioxide in a supercritical state signifies carbon dioxide in a supercritical state above the critical temperature (30.98 °C) and critical pressure (7.38 MPa), and carbon dioxide under temperature or pressure conditions above the critical point means carbon dioxide under conditions in which only the critical temperature or only the critical pressure has exceeded critical conditions (between temperature and pressure, one is not exceeding critical conditions). Below we will refer to carbon dioxide in a supercritical state or under temperatures or pressure conditions above the critical point as "supercritical carbon dioxide."

Equipment when pressure treating the raw material comprising the additive with carbon dioxide is not specifically limited, and it is possible to perform pressure treatment with $CO_2$ by supplying a predetermined volume of fluid containing carbon dioxide into a pressure tight container, for example, after taking the additive raw material into the pressure tight container. Moreover, if the raw material is agitated by an agitation means during the pressure treatment, it is possible to bring the entire amount of raw material evenly into contact with $CO_2$, and it also allows for shortening the treatment time. As for the method of pressurization, whether in a batch mode or continuous mode, it is preferable here that the fluid containing carbon dioxide that is supplied into the pressure tight container have a high concentration of carbon dioxide, and it is preferable, in terms of the proportions of the quantities of composition subjected to processing and carbon dioxide in the carbon-dioxide-containing fluid, that carbon dioxide is present at or above the saturation solubility of the composition subjected to processing. At this time, it makes no difference whether the fluid containing the carbon dioxide is in the form of a solid, solid-gas mixture phase, gas-liquid mixture phase, or gas.

A greater than 5% content is desirable for the concentration of carbon dioxide in the fluid, while 10% content is further desirable, and it is especially desirable to use a fluid containing only carbon dioxide.

Pressure and temperature when pressure treating the raw material with carbon dioxide depend upon the type of raw material (additive) to be processed and the concentration, etc., of the carbon dioxide in the fluid, but from the standpoint of performing the pressure treatment of carbon dioxide effectively, we presume the pressure of the carbon dioxide inside a high pressure vessel to be at least at atmospheric pressure, and the temperature is presumed to be a temperature at which the principal components of the subject materials in the process will not solidify. For example, it would be at least 0°C if the material to be processed were an emulsion that contained primarily water. Pressure, from the standpoint of the effects resulting from carbon dioxide (improvements in compatibility) and durability of the container, etc., would be at least atmospheric pressure, preferably at least 1 MPa but no more than 50 MPa, and more preferably at least 5 MPa but no more than 30 MPa.

Because pressure treatment time also has an effect on the concentration of carbon dioxide in the fluid, on the pressure and temperature, as well as on the types and amounts of raw material (additive) to be processed, it cannot be prescribed categorically, but from the standpoint of the effects resulting from the carbon dioxide and productivity, at least 10 minutes but no more than two hours would be desirable, and at least 15 minutes but no more than one hour would be further desirable.

We reduce the pressure on the raw material comprising the additive after pressure treating it with carbon dioxide, or preferably with supercritical carbon dioxide. At this time, it is desirable to reduce the pressure gradually to under atmospheric pressure, and it is desirable to use a depressurization rate such that the contents are entrained and do not come out, for example, using a depressurization rate of 0.1 to 1 MPa per minute.

An additive obtained by decompressing it after pressure treating it with a fluid containing carbon dioxide prepared in the above manner is considered to be one whose dispersiveness against a base material would be improved in comparison to an untreated additive. The reason for that is uncertain, but according to the experiments of the inventors, an improvement in wettability and a drop in viscosity were noted due to reducing the pressure after pressure treating the raw material comprising the additive with carbon dioxide. Accordingly, if we add the additive that was obtained by pressure treatment with carbon dioxide in this manner to the base material of the composition (polymers) and combine them together, it is hypothesized that the additive would spread out thinly on the surface when the base material is a solid such as pellets, or, conversely, that compatibility between the additive and base material would improve and mix together more readily when the base material is a liquid.

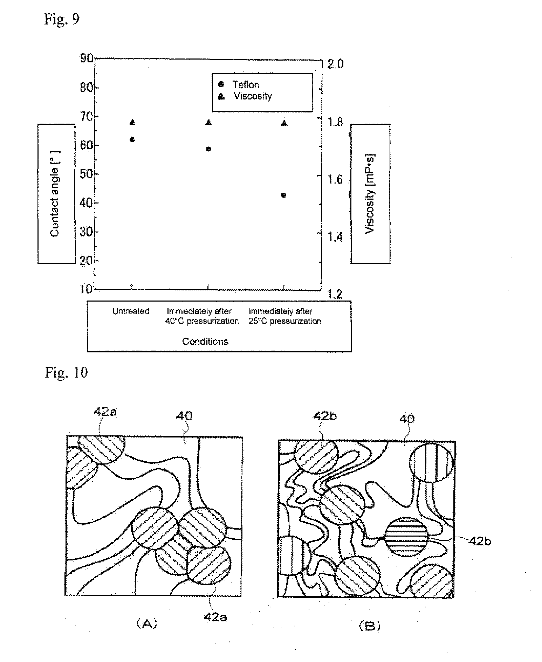

More specifically, when we added untreated additive 42a into the base material 40 as shown in Fig. 10(A), even when another additive 42a clumped together and was difficult to disperse, if we performed the $CO_2$ pressure treatment of the present invention and added it, the additive 42b as shown in Fig. 10(B) would disperse evenly in base material 40 and we believe it would be possible to demonstrate the functionality resulting from additive 42b to the maximum extent.

< Base Materials >

When adding an additive of the present invention to a base material to produce (prepare) a composition, the base material may be arbitrarily selected according to the purpose (application) and may be either liquid or solid.

For example, when adding an additive obtained by means of the invention to produce a resin molding such as of plastic, you may arbitrarily choose from known thermoplastic resins or thermosetting resins as a base material according to purpose or application.

Included as thermoplastic resins, for example, are general-purpose plastics such as PE (polyethylene), PVC (polyvinyl chloride), PP (polypropylene), ABS (acrylonitrile butadiene styrene), AS (acrylonitrile styrene), PMMA (polymethyl methacrylate), PVA (polyvinyl alcohol), PVDC (polyvinylidene chloride), PBD (polybutadiene), and PET (polyethylene terephthalate), as well as engineering plastics such as PA (polyamide), POM (polyacetyl), PC (polycarbonate), PPE (denatured polyphenylene ether), PBT (polybutylene terephthalate), GF-PET (GF-reinforced polyethylene terephthalate), ultra-high-polymer ethylene (UHPE), polysulfone (PSF), polyethersulfone (PES), polyphenylene sulfide (PPS), polyallylate (PAR), polyamide-imide (PAI), polyether imide (PEI), polyetheretherketone (PEEK), polyimide (PI), liquid crystal polymer (LCP), and fluorine resin.

Also included as thermosetting resins are phenol, urea, melamine, alkyd, unsaturated polyester, epoxy, diallyl terephthalate, polyurethane, and silicone.

You may select a base material from the above polymers according to your purpose, and you may use polymer alloys in which are intermixed a plurality of types of polymeric materials. For example, in a case where the object is improvement in light transmittance or improvement in strength, you may utilize materials ideally having crystallinity like an engineering plastic.

Then, add the additive obtained by decompression, after pressure treating the raw material comprising the additive in the manner described above with carbon dioxide, to the base material in the prescribed proportions according to purpose and mix together. When using a molding, you may then perform the molding process in accordance with the intended use after mixing the additive and base material. The molding method is not specifically limited, and you may select from known molding methods including, for example, injection molding, extrusion molding, compression molding, transfer molding, blow molding, thermoforming, laminate molding, foam molding, rotational molding, cast molding, and dip molding. Moreover, using a master batch containing an additive on which $CO_2$ pressure treatment has been performed according to the invention, you may produce the intended molding by mixing this together with the base material.

A composition obtained by adding and mixing an additive of the present invention and additionally forming it as needed has superior additive dispersiveness, and the effect from the additive will appear to be obvious in comparison with a composition to which an ordinary additive has been added on which no pressure treatment with carbon dioxide has been performed. For that reason, if you utilize an additive that has undergone the $CO_2$ pressure treatment of the present invention, besides being able to achieve quality improvements, you will also be able to obtain the equivalent reformulation effect with a smaller amount than an ordinary additive, making it possible to achieve a reduction in production cost (material cost) as well.

Working Examples

We describe working examples below.

(Working Example 1)

< $CO_2$ Pressure Treatment of the Additive >

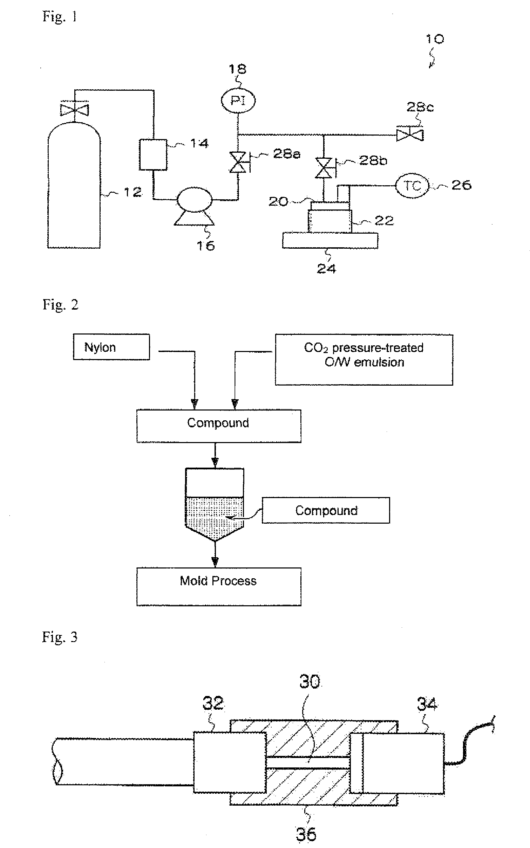

We performed the pressure treatment with carbon dioxide on Matsumoto Silicon Softener #302 (dimethylpolysiloxane emulsion: resin finishing agent, Matsumoto Yushi-Seiyaku Co., Ltd., abbreviated below as MS302). Using the $CO_2$ pressure treatment apparatus 10 equipped with $CO_2$ tank 12, cooling means 14, pump 16, pressure gauge 18, air tight container 20, heater 22, magnetic stirrer 24, temperature control means 26, and valves 28a, 28b, and 28c as shown in Fig. 1, we introduced $CO_2$ into air tight container 20 after filling it with MS302 and stirred while keeping it at prescribed pressure and temperature. After stirring for the prescribed time, we decreased the pressure at 1 MPa/minute.

< Production of moldings >

Using nylon (PA6: PA66=4:1) as a base material; we performed extrusion molding in the following conditions to produce moldings A through E. Note that when molding was done with the addition of an additive, as shown in Fig. 2, we made the compound by mixing at the proportion of 3g of additive (MS302) to 1 kg of nylon, and placed this into an extrusion molder to perform the molding process.
Cooling tank temperature: 65°C
Extrusion rotational speed: 270 rpm
Extrusion temperature: 230°C

Molded Article A: molded with nylon only

Molded Article B: MS302 (untreated) mixed into nylon and molded Molded Article C: After performing $CO_2$ pressure treatment for 15 min. in MS302 at 50°C and 10 MPa, and $N_2$ was bubbled in for 15 minutes, and this was mixed into nylon and molded
Molded Article D: Pressure was decreased after performing the above-described $CO_2$ pressure treatment (10 MPa, 15 minutes) in MS302, and this was mixed together in nylon and molded
Molded Article E: After bubbling in $N_2$ for 15 minutes, the above-mentioned $CO_2$ pressure treatment (10 MPa, 15 minutes) was additionally performed in MS302, and this was mixed into nylon and molded

< Assessments >

We measured crystallinity and light transmittance for Molded Articles A through E.

(a) Measurement of crystallinity

Using a differential scanning calorimeter (DSC, Seiko), we measured the crystallinity of Molded Articles A through E. Measurement conditions are as follows.
Rate of temperature increase: 10°C / min.
Measurement range: 25°C to 250°C
Reference: $\alpha$ - alumina
Crystallinity was calculated by the following formula.

$$\text{Crystallinity } Xc = (Hc/Hc0) \times 100$$

Hc: Heat of fusion [J/g] on the DSC curve
Hc0: Heat of fusion [J/g] at 100% crystallinity

(b) Measurement of light transmittance

For the light transmittance measurement, we wrapped the circumference of sample 30 (diam.: 2 mm, length: 3 cm) with black tape 36, directed the incident light of light source 32 from one end of sample 30, and measured the intensity of the light that penetrated to the other end with photon sensor 34. We set $I_0$[mA] to be he intensity of the light when sample 30 was not inserted and the gap between light source 32 and photon sensor 34 was empty, set I[mA] to be the intensity of light that passed through sample 30, and calculated light transmittance by the following formula.

$$\text{Light transmittance (\%)} = I / I_0$$

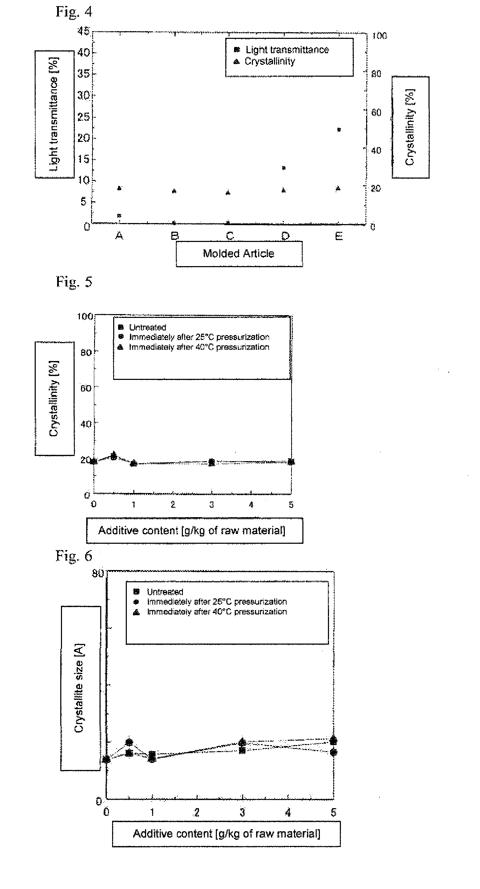

We show in Fig. 4 the crystallinity and light transmittance of each sample (Molded Articles A through E). Crystallinity in Molded Articles A through E was essentially identical, but as for light transmittance, in contrast to being extremely small for Molded Articles A through C, the light transmittance in Molded Article E that was $CO_2$ pressure treated was in excess of 10% and the light transmittance in Molded Article E that was specifically $CO_2$ pressure treated after $N_2$ bubbling exceeded 20%. In Molded Article C, because $N_2$ bubbling was performed after $CO_2$ pressure treating the additive, it was presumed that the compatibility with the base material had declined.

< Crystallinity and Crystallite Size Treatment Temperature Dependency Assessment >

We prepared one MS302 sample for $CO_2$ pressure treatment at 25°C and another MS302 sample for $CO_2$ pressure treatment at 40°C. Note that treatment pressure and process time were both 12 MPa and 15 min.
We added a prescribed amount of each additive to the raw material (nylon) and extrusion molded them, after which we measured the crystallinity and crystallite size of the molded articles. Those results are shown in Fig. 5 and 6 respectively. As we understand from these figures, crystallinity and crystallite size did not depend on the treatment temperature of the additive or the additive amount and were nearly constant.

< Light Transmittance >

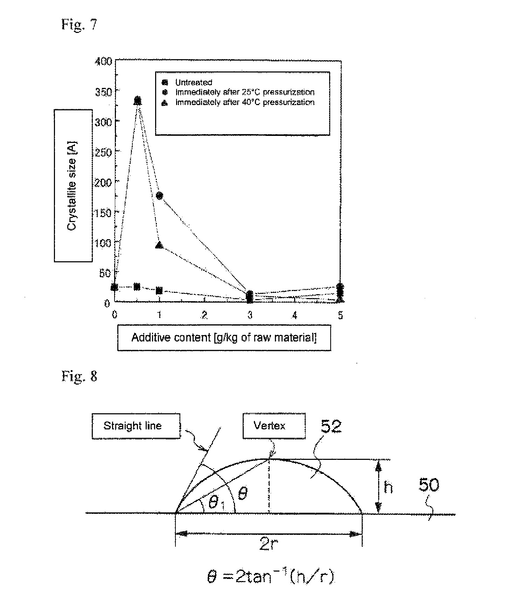

When we measured the light transmittance of the above molded articles, as shown in Fig. 7, light transmittance was low and did not depend on the volume of additive in molded articles to which we had added untreated additive, but the molded articles to which we had added an additive that was $CO_2$ pressure treated exhibited a high light transmittance, especially when the volume of the additive in the raw material was between 0.5 and 1 gram/kg.

< Viscosity/Surface Tension of the Additive >

We used a tuning fork type vibratory style viscometer (A&D Company, Ltd, Japan, Mfr., Trade name: Vibro Viscometer SV-10) for the MS302 after $CO_2$ pressure treatment to measure the viscosity of additives.

As shown in Fig. 8, we also placed a drop of MS302 (additive 52) onto Teflon® sheet 50 directly after $CO_2$ pressure treatment and used the $\Theta / 2$ method to measure contact angle $\Theta$ on the surface of sheet 50.

We show the measurement results for viscosity and contact angle in Fig. 9. You can see that the MS302 that was $CO_2$ pressure treated has a smaller contact angle compared to the untreated samples and that wettability has improved.

(Working Examples 2 through 9)

Into each additive listed in Table 1 below we mixed additive in the proportion or 3 grams to 1 kilogram of nylon respectively after performing $CO_2$ pressure treatment in the same manner as Molded Article D in Working Example 1 to make a compound and put this into an extrusion molder to perform the molding process. We used nylon (PA6: PA66 = 4.1) as the base material.

(Comparative Examples)

Aside from not adding an additive, we performed the molding in the same manner as Molded Article D in Working Example 1. The reason we engaged in a comparison with material to which no additive had been added was because the untreated additives had absolutely no compatibility with nylon.

[Table 1]

|  | Trade name/compound name | Manufacturer/Seller |
|---|---|---|
| Working Ex. 2 | KBM-403 (3-glycidoxypropyl trimethoxysilane) | Shinetsu Chemical Co., Ltd. |
| Working Ex. 3 | KBM-503 (3-methaerytoxypropyl trimethoxysilane) | Shinetsu Chemical Co., Ltd. |
| Working Ex. 3 | KBM-903 (3-aminopropyl trimethoxysilane) | Shinetsu Chemical Co., Ltd. |
| Working Ex. 4 | KBM-13 (methyltrimethoxysilane) | Shinetsu Chemical Co., Ltd. |
| Working Ex. 5 | KBM-3103C (decyl)trimethoxysilane | Shinetsu Chemical Co., Ltd. |
| Working Ex. 6 | DCO (dehydrated castor oil) | Itoh Oil Chemicals Co., Ltd. |
| Working Ex. 7 | Soybean oil | " |
| Working Ex. 8 | Tung oil | " |
| Working Ex. 9 | Rice wax | Boso Oil & Fat Co., Ltd. |
| Comparative Ex. 1 | No additive | " |

< Transparency >

When we conducted an assessment by eye of the transparency of the molded articles, the molded articles in Working Examples 2 through 9 showed improvements in transparency compared to the molded articles in Comparative Example 1 similar to Molded Article D in Working Example 1.

< Formability >

The molded articles in Working Examples 2 through 9 showed improvement in compatibility and fluidity compared to the molded articles in Comparative Example 1 and were superior in formability.

**Claims**

1. An additive obtained by pressure-treating a raw material comprising one or a plurality of components with carbon dioxide and afterwards reducing the pressure.

2. An additive as defined in Claim 1, wherein the raw material is a granule or powder.

3. An additive as defined in Claim 1, wherein the raw material comprises an emulsion, microemulsion or non-compatible liquid mixture whose dispersion phase component is dispersed in a continuous phase component, and the raw material comprises a granule or powder onto which the emulsion, microemulsion or non-compatible liquid is adhered.

4. An additive as defined in Claim 1, wherein the raw material is a liquid comprising one component, a homogeneous liquid mixture comprising a plurality of components, an inhomogeneous liquid mixture comprising a plurality of components, or a mixture of a liquid and a solid.

5. An additive as defined in Claim 4, wherein the raw material is an inhomogeneous liquid mixture comprising a plurality of components and the mixture is an emulsion, microemulsion or non-compatible liquid mixture in which a dispersion phase component is dispersed in a continuous phase component.

6. An additive as defined in Claim 5, wherein the inhomogeneous liquid mixture additionally contains a surfactant or a viscosity modifier.

7. An additive as defined in Claim 4, wherein the raw material is a mixture of a liquid and a solid and the mixture additionally contains a surfactant or a dispersion stabilizer.

8. A composition containing an additive as defined in any preceding claim.

9. A method for producing an additive comprising the steps of:

   pressure-treating a raw material comprising one or a plurality of components with carbon dioxide, and subsequently reducing the pressure applied to the raw material.

Fig. 1

Fig. 2

| Nylon | | CO₂ pressure-treated O/W emulsion |

Compound

Compound

Mold Process

Fig. 3

Fig. 4

Fig. 5

Fig. 6

Fig. 7

Fig. 8

$$\theta = 2\tan^{-1}(h/r)$$

Fig. 9

Fig. 10

## INTERNATIONAL SEARCH REPORT

| | International application No. |
|---|---|
| | PCT/JP2009/052573 |

A.  CLASSIFICATION OF SUBJECT MATTER
*C08K9/02*(2006.01)i, *C08J3/00*(2006.01)i, *C08L101/00*(2006.01)i

According to International Patent Classification (IPC) or to both national classification and IPC

B.  FIELDS SEARCHED

Minimum documentation searched (classification system followed by classification symbols)
C08K3/00-13/08, C08J3/00-3/22, C08L1/00-101/16

Documentation searched other than minimum documentation to the extent that such documents are included in the fields searched
Jitsuyo Shinan Koho          1922-1996   Jitsuyo Shinan Toroku Koho   1996-2009
Kokai Jitsuyo Shinan Koho   1971-2009   Toroku Jitsuyo Shinan Koho   1994-2009

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X | JP 2007-326888 A  (Mitsuo MINAGAWA), 20 December, 2007 (20.12.07), Claims; Par. Nos. [0011] to [0014] (Family: none) | 1-9 |
| X | JP 2002-302435 A  (Takeda Chemical Industries, Ltd.), 18 October, 2002 (18.10.02), Claims; Par. Nos. [0016] to [0020] & EP 1354581 A1          & US 2004/0052854 A1 & WO 2002/051381 A1 | 1,2,8,9 |
| P,X | JP 2008-201916 A  (Boron Japan Co., Ltd.), 04 September, 2008 (04.09.08), Claims; Par. Nos. [0008] to [0018]; examples (Family: none) | 1-9 |

| ☒  Further documents are listed in the continuation of Box C. | ☐  See patent family annex. |
|---|---|

| * | Special categories of cited documents: |
|---|---|
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 08 May, 2009 (08.05.09) | 19 May, 2009 (19.05.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

| International application No. |
| --- |
| PCT/JP2009/052573 |

C (Continuation). DOCUMENTS CONSIDERED TO BE RELEVANT

| Category* | Citation of document, with indication, where appropriate, of the relevant passages | Relevant to claim No. |
| --- | --- | --- |
| P,X | JP 2008-50497 A (Dow Corning Toray Co., Ltd.), 06 March, 2008 (06.03.08), Claims; Par. Nos. [0029] to [0033], [0047], [0059]; examples (Family: none) | 1-9 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003211483 A
- WO 2004033530 A
- JP H11255925 B